# EUROPÄISCHE PATENTSCHRIFT

(11) **EP 2 251 947 B1**
(45) Veröffentlichungstag und Bekanntmachung des Hinweises auf die Patenterteilung: **08.11.2017**
(21) Anmeldenummer: 10162544.0
(22) Anmeldetag: 11.05.2010
(51) Int. Cl.: H02G 3/04, E04F 17/08

(54) **Systemkanal für die Medienversorgung und Arbeitsplatz mit einem solchen Systemkanal**
System channel for supply of media and workplace with such a system channel
Canal systémique pour une alimentation de milieux et poste de travail doté d'un canal systémique

(30) Priorität: 11.05.2009 DE 202009006776 U
(43) Veröffentlichungstag der Anmeldung: 17.11.2010
(73) Patentinhaber: Wesemann GmbH, 28857 Syke (DE)
(72) Erfinder: Wesemann, Frank, 28857, Syke (DE)
(74) Vertreter: Tappe, Udo

(56) Entgegenhaltungen:
- EP-A1- 1 073 172
- DE-U1- 29 511 327
- US-A- 4 720 768
- US-A1- 2007 267 209

## Beschreibung

Die Erfindung betrifft einen Systemkanal für die Medienversorgung, insbesondere an einem Laborarbeitsplatz, mit einer Außenumfangsfläche, und mit einem Befestigungsprofil im Bereich der Außenumfangsfläche zur Befestigung von Zubehör, wobei sich das Befestigungsprofil von der Außenumfangsfläche nach außen erstreckt.

Ein derartiger Systemkanal ist beispielsweise aus der DE 295 11 327 U1 bekannt. Hierbei ist das Befestigungsprofil mit einem verschwenkbar gelagerten Hebel verbunden.

Aus der EP 1 073 172 A1 und der US 4,720,768 A ist jeweils ein Systemkanal mit einem einstückig mit dem Systemkanal ausgebildetem Befestigungsprofil bekannt.

Der US 2007/0267209 A1 ist ein mehrteilig ausgebildeter Systemkanal zu entnehmen, bei dem das Befestigungsprofil in einem Spalt zwischen einem Leitungsabschnitt und einer Lampenabdeckung des Systemkanals angeordnet und mit dem Leitungsabschnitt verschraubt ist.

Derartige Systemkanäle finden beispielsweise Verwendung für die Bereitstellung und Installation von Medien wie Strom, Wasser, Gasen usw. aber auch für die Datenversorgung. Bei den bekannten Systemkanälen ist häufig als Befestigungsprofil eine so genannte Innennut vorgesehen, die sich im Inneren des Systemkanals befindet und nach außen geöffnet ist. Mittels Verwendung so genannter Nutsteine lässt sich Zubehör, wie beispielsweise Stativstangenhalter, Lampen usw. auf bekannte Weise mittels Verschrauben mit dem Nutstein an dem Systemkanal befestigen.

Nachteilig bei dem bekannten Systemkanal ist, dass sich einerseits die Innennut nur schwer reinigen lässt und andererseits die Befestigung von Zubehör mittels der Nutsteine verhältnismäßig kompliziert ist. So müssen die Nutsteine entweder seitlich vom offenen Ende her in die Innennut eingeführt werden oder es müssen längliche Nutsteine verwendet werden, die in einer Längsausrichtung in die Nut direkt eingeführt werden können. Diese Nutsteine müssen sodann innerhalb der Nut verdreht werden, so dass nach Verschrauben mit dem Zubehör ein zuverlässiger Halt gewährleistet wird. Dies erfordert ein umständliches Hantieren innerhalb der eigentlich nicht zugänglichen Nut. Fällt dabei ein Nutstein versehentlich herunter, so ist dieser innerhalb der Nut quasi nicht mehr zugänglich. Darüber hinaus kann bei einem nicht vollständigen Verschwenken des Nutsteines von der Einführposition in eine Halteposition ein sicherer Halt des zu befestigen Zubehörs eventuell nicht gewährleistet werden.

Das der Erfindung zugrunde liegende Problem ist es, einen Systemkanal anzugeben, bei dem sich das Befestigungsprofil einfach reinigen lässt und gleichzeitig das Anbringen von Zubehör an dem Befestigungsprofil vereinfacht wird.

Das Problem wird dadurch gelöst, dass das Befestigungsprofil in einer Innennut des Systemkanals befestigbar ist, wobei die Innennut in einem Gehäuse des Systemkanals ausgebildet ist und das Besfestigungsprofil einen Befestigungsabschnitt aufweist, der in die Innennut zum Befestigen einsteckbar oder einschiebbar ist.

Auf diese Weise ist das Befestigungsprofil in allen wesentlichen Bereichen von außen direkt und einfach zugänglich. Eine eventuelle Nut ist als Außennut gefertigt, so dass sie einfach ausgewischt werden kann. Zum Befestigen von Zubehör kann dieses einfach auf das Befestigungsprofil aufgehängt oder an dieses angeklemmt werden.

Eine Alternativ zeichnet sich dadurch aus, dass das Befestigungsprofil einstückig mit dem Systemkanal ist. Diese integrale Ausführung vermeidet unnötige Hohlräume, die wiederum verschmutzen könnten. Gleichzeitig wird ein Höchstmaß an Festigkeit und Montagefreundlichkeit erzielt. Es ist aber auch möglich, dass das Befestigungsprofil in einer Innennut des Systemkanals befestigbar ist. Auf diese Weise wird die Innennut mit dem Befestigungsprofil verschlossen, so dass ein Verschmutzen der Innennut weitgehend vermieden wird. Es lässt sich auf diese Weise einerseits mit einem geringen Maß an Lagerhaltungsaufwand sowohl der bekannte Systemkanal als auch der erfindungsgemäße Systemkanal bevorraten. Gleichzeitig ist eine Nachrüstung der konventionellen Systemkanäle mit dem Befestigungsprofil mit den Erfindungsmerkmalen möglich.

Bei einer vorteilhaften Ausgestaltung der Erfindung weist das Befestigungsprofil einen Befestigungsabschnitt auf, der in die Innennut zum Befestigen einsteckbar oder einschiebbar ist. Dadurch wird die Montage des Befestigungsprofils in der Innennut besonders einfach. Es ist beispielsweise möglich, den Befestigungsabschnitt einfach in der Innennut zu verschrauben. Es ist aber auch eine Klemm- oder Rastarretierung in der Innennut möglich.

Eine andere Weiterbildung der Erfindung zeichnet sich dadurch aus, dass das Befestigungsprofil einen Tragabschnitt aufweist. Der Tragabschnitt kann beispielsweise einen T-förmigen oder pilzkopfförmigen Querschnitt haben. Es ist in diesem Fall einfach möglich, Zubehör mittels Aufschieben, oder Aufklemmen auf diesen Tragabschnitt aufzusetzen und daran zu befestigen. Es ist aber auch möglich, dass der Tragabschnitt einen nach außen weisende Leiste aufweist, auf die ein Zubehörhalter aufsteckbar, aufhängbar oder zwingenartig aufklemmbar ist. So kann auf die Leiste in einer beliebigen Position ein Zubehörhalter eingehängt oder durch Aufstecken an dem Befestigungsprofil befestigt werden. Grade bei dem zwingenartigen Aufklemmen auf der Leiste ist eine hohe Tragfähigkeit und ein zuverlässiges Sichern gegen ungewolltes Verschieben auf der Leiste gegeben. Die Leiste kann bei einer Weiterbildung ein rechteckiges oder kreissegmentförmiges Profil mit nach außen weisender Rundung haben. Hierdurch ergibt sich eine hohe Haltekraft bei gleichzeitig ästhetisch anspruchvollen Äußeren.

Vorzugsweise besteht das Befestigungsteil aus Aluminium oder ist als Spritzgussteil hergestellt. Damit lässt sich eine kostengünstige Fertigung bei hoher Stabilität erzielen.

Nach einem anderen Aspekt betrifft die Erfindung einen Arbeitsplatz, insbesondere einen Laborarbeitsplatz, mit einem Systemkanal nach einem der vorhergehenden Ansprüche. Ein solcher Arbeitsplatz ist einfach sauber zu halten, da insbesondere auf eine Innennut am Systemkanal zum Befestigen von Zubehör verzichtet werden kann. Gleichzeitig lässt sich einfach und komfortabel und an beliebiger Stelle an dem nach außen weisenden Befestigungsprofil beliebiges Zubehör befestigen.

Nachfolgend werden Ausführungsbeispiele der Erfindung anhand der Zeichnungen näher erläutert. Es zeigen:
- Fig. 1: einen Laborarbeitsplatz mit einem Systemkanal mit den Erfindungsmerkmalen in einer schematischen Seitenansicht,
- Fig. 2: den Systemkanal von Fig. 1 im Querschnitt,
- Fig. 3: einen Systemkanal mit einem anderen Befestigungsprofil als ein weiteres Ausführungsbeispiel der Erfindung, und
- Fig. 4: das an dem Systemkanal befestigte Profil in einer vergrößerten Darstellung.

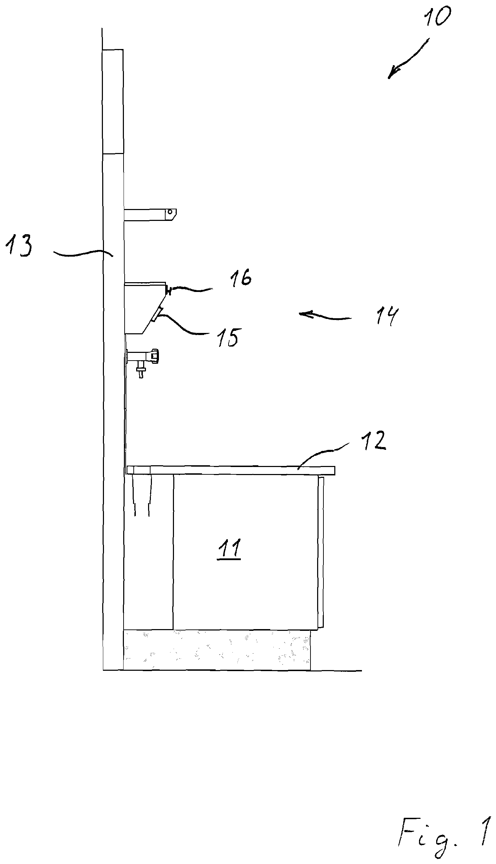

Fig. 1 zeigt einen Arbeitsplatz 10 mit den Erfindungsmerkmalen in einer schematischen Seitenansicht. Gezeigt ist ein Laborarbeitsplatz 10, der einen Schrank 11 aufweist, auf dessen Oberseite eine Arbeitsplatte 12 angeordnet ist. Von der Rückseite des Schrankes 11 her erstreckt sich nach oben eine Tragstruktur 13, an der ein Systemkanal 14 oberhalb der Arbeitsplatte 12 aber noch in Greifhöhe angeordnet ist. Der System kanal 14 dient zur Aufnahme von Installationsleitungen und Versorgungsauslässen. Stellvertretend ist in Fig. 1 ein Anschluss 15 dargestellt, bei dem es sich um eine Steckdose 15 handelt. Außerdem weist der Systemkanal 14 in seinem oberen Bereich und einer Bedienperson zugewandt ein von dem Systemkanal 14 hervorstehendes Befestigungsprofil 16 auf.

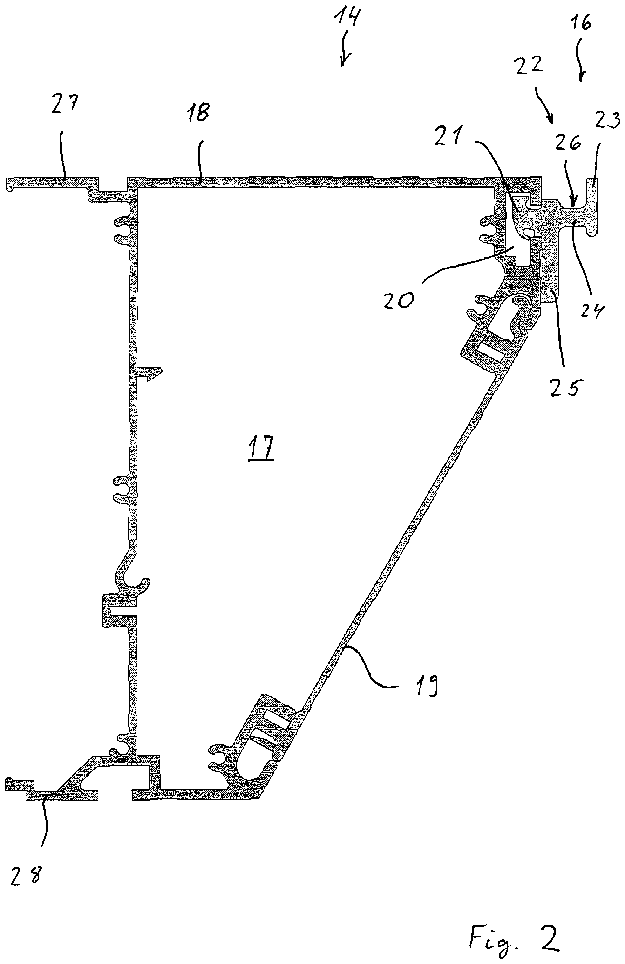

Fig. 2 zeigt eine vergrößerte Darstellung des Systemkanals 14 mit dem Befestigungsprofil 16 im Querschnitt. Wie sich der Figur entnehmen lässt, weist der System kanal 14 einen Innenraum 17 auf, in dem Installationsleitungen verlegt werden können. Der Innenraum 17 wird gebildet von einem Gehäuse 18, das mittels eines lang gestreckten Deckels 19 an seiner einer Bedienperson zugewandten Seite verschlossen ist. In dem Deckel 19 können bei Bedarf Anschlüsse, wie beispielsweise die Steckdose 15 angeordnet werden.

Wie sich der Figur weiter entnehmen lässt, ist im oberen Bereich und einer Bedienperson zugewandt eine Innennut 20 in dem Gehäuse 18 ausgebildet.

Wie sich der Figur weiter entnehmen lässt, weist das Befestigungsprofil 16 einen Befestigungsabschnitt 21 auf, der in dem gezeigten montierten Zustand in der Innennut 20 angeordnet ist. An seinem von dem Befestigungsabschnitt 21 abgewandten Ende hat das Befestigungsprofil darüber hinaus einen Tragabschnitt 22 mit einer Leiste 23 die mittels eines Distanzabschnittes 24 an einem Anlageabschnitt 25 befestigt ist. Der Anlageabschnitt 25 wiederum ist mit dem Befestigungsabschnitt 21 verbunden. Auf diese Weise wird zwischen der Leiste 23 und dem Anlageabschnitt 25 eine Außennut 26 gebildet.

Der Figur ist außerdem noch zu entnehmen, dass der Systemkanal 14 zwei Halteabschnitte 27, 28 aufweist, die von einer Bedienperson abgewandt angeordnet sind und zum Befestigen des Systemkanals 14 an der Tragstruktur 13 dienen.

In einem montierten Zustand, in dem der Befestigungsabschnitt 21, wie in der Fig. 2 dargestellt, in der Innennut 20 angeordnet ist, lässt sich Zubehör einfach an dem Tragabschnitt 22 befestigen. Die dabei auftretende Last wird über den Anlageabschnitt 25 auf das Gehäuse 18 des Systemkanals 14 abgeleitet. Zum Befestigen des Befestigungsprofils 16 an dem Systemkanal ist es lediglich erforderlich, den Befestigungsabschnitt 21 in die Innennut 20 einzuführen. Aufgrund der hackenförmigen Ausgestaltung des Befestigungsabschnittes 21 ist dieser sodann bereits ausreichend in der Innennut 20 fixiert.

Zum Befestigen von Zubehörteilen an dem Tragabschnitt 22 können diese entweder in die Innennut 26 eingehängt oder auf die Leiste 23 gesteckt oder geklemmt werden. Es ist beispielsweise auch möglich, eine zwingenartige Halterung ähnlich einer Stativstangenhalterung direkt auf die Leiste 23 aufzustecken und dort zu verklemmen oder zu verschrauben.

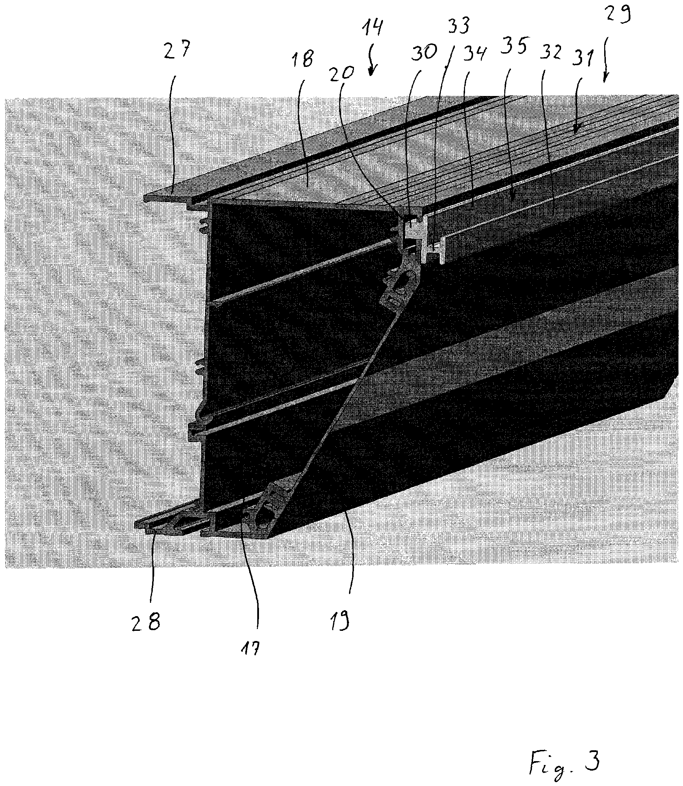

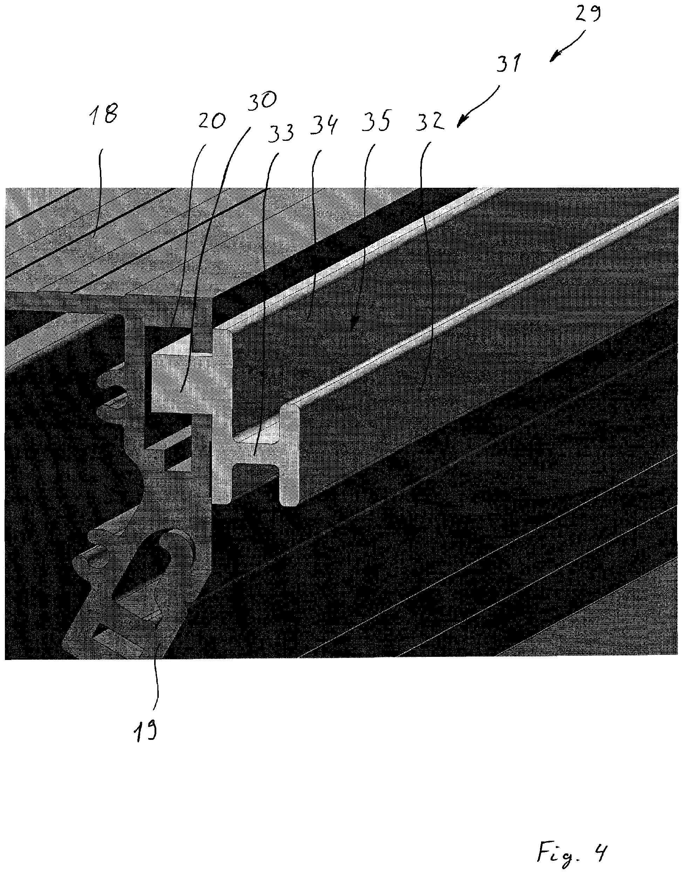

Fig. 3 zeigt eine perspektivische Teildarstellung eines Systemskanals 14 mit einem weiteren Befestigungsprofil 29. Das Befestigungsprofil 29 entspricht im Wesentlichen dem Befestigungsprofil 16. Wie dieses ist auch das Befestigungsprofil 29 aus Aluminium als Spritzgussteil gefertigt. Auch das Befestigungsprofil 29 weist einen Befestigungsabschnitt 30 und einen Tragabschnitt 31 auf, der wiederum von einer Leiste 32 und einem Distanzabschnitt 33 gebildet wird. Der Tragabschnitt ist mittels eines Anlageabschnittes 34 mit dem Befestigungsabschnitt 30 verbunden. Wie sich der Figur entnehmen lässt, wird von der Leiste 32, dem Distanzabschnitt 33 und dem Anlageabschnitt 34 eine Außennut 35 gebildet. Genauere Erläuterungen zu dem Befestigungsprofil 29 erfolgen nachfolgend anhand von Fig. 4.

Fig. 4 zeigt eine vergrößerte Darstellung der Befestigung des Befestigungsprofils 29 an dem Gehäuse 18. Wie sich der Figur entnehmen lässt, ist der Befestigungsabschnitt 30 bei dem gezeigten Ausführungsbeispiel mit einem rechteckigen Querschnitt versehen. Auf diese Weise kann er einfach in die Innennut 20 gesteckt werden. Es ist in diesem Fall jedoch anders bei dem in Figur 2 gezeigten Ausführungsbeispiel erforderlich, dass der Befestigungsabschnitt 30 in der Innennut 20 verschraubt wird.

Der Tragabschnitt 31 ist bei dem gezeigten Ausführungsbeispiel so ausgebildet, dass die Leiste 32, der Instanzabschnitt 33 und der Anlageabschnitt 34 gemeinsam ein I-Profil oder-Doppel-T-Profil bilden. Eine Befestigung von beliebigem Zubehör an einem derartigen I-Profil oder Doppel-T-Profil ist einfach und zuverlässig möglich.

Es ist aber auch möglich, andere Profile zu verwenden. Beispielsweise kann die Leiste 32 pilzkopfförmig oder kreissegmentförmig ausgebildet sein.

### Bezugszeichenliste:

- 10: Arbeitsplatz
- 11: Schrank
- 12: Arbeitsplatte
- 13: Tragstruktur
- 14: Systemkanal
- 15: Anschluss
- 16: Befestigungsprofil
- 17: Innenraum
- 18: Gehäuse
- 19: Deckel
- 20: Innennut
- 21: Befestigungsabschnitt
- 22: Tragabschnitt
- 23: Leiste
- 24: Distanzabschnitt
- 25: Anlageabschnitt
- 26: Außennut
- 27: Halteabschnitt
- 28: Halteabschnitt
- 29: Befestigungsprofil
- 30: Befestigungsabschnitt
- 31: Tragabschnitt
- 32: Leiste
- 33: Distanzabschnitt
- 34: Anlageabschnitt
- 35: Außennut

## Patentansprüche

1. Systemkanal für die Medienversorgung, insbesondere an einem Laborarbeitsplatz (10), mit einer Außenumfangsfläche und mit einem Befestigungsprofil im Bereich der Außenumfangsfläche zur Befestigung von Zubehör, wobei sich das Befestigungsprofil (16) von der Außenumfangsfläche nach außen erstreckt, **dadurch gekennzeichnet, dass** das Befestigungsprofil (16) in einer Innennut (20) des Systemkanals (14) befestigbar ist, wobei die Innennut (20) in einem Gehäuse (18) des Systemkanals (14) ausgebildet ist und das Befestigungsprofil (16) einen Befestigungsabschnitt (21) aufweist, der in die Innennut (20) zum Befestigen einsteckbar oder einschiebbar ist.

2. Systemkanal nach Anspruch 1, **dadurch gekennzeichnet, dass** der Befestigungsabschnitt (21) des Befestigungsprofils (16) in einem montierten Zustand in der Innennut (20) angeordnet ist.

3. Systemkanal nach Anspruch 1 oder 2, **dadurch gekennzeichnet, dass** ein Anlagenabschnitt (25) mit dem Befestigungsabschnitt (21) verbunden ist, wobei in einem montierten Zustand die auftretende Last über den Anlagenabschnitt (25) auf das Gehäuse (18) des Systemkanals (14) abgeleitet wird.

4. Systemkanal nach einem der vorhergehenden Ansprüche, **dadurch gekennzeichnet, dass** das Befestigungsprofil (16) einen Tragabschnitt (22) aufweist.

5. Systemkanal nach Anspruch 4, **dadurch gekennzeichnet, dass** der Tragabschnitt (22) einen T-förmigen oder pilzkopfförmigen Querschnitt hat.

6. Systemkanal nach Anspruch 4 oder 5, **dadurch gekennzeichnet, dass** der Tragabschnitt (22) eine nach außen weisende Leiste (23, 32) aufweist, auf die ein Zubehörhalter aufsteckbar, aufhängbar oder zwingenartig aufklemmbar ist.

7. Systemkanal nach Anspruch 6, **dadurch gekennzeichnet, dass** die Leiste (23, 32) ein rechteckiges oder kreissegmentförmiges Profil mit nach außen weisender Rundung hat.

8. Systemkanal nach einem der vorhergehenden Ansprüche, **dadurch gekennzeichnet, dass** das Befestigungsprofil (16) aus Aluminium besteht oder als Spritzgussteil hergestellt ist.

9. Arbeitsplatz, insbesondere Laborarbeitsplatz, mit einem Systemkanal (14) nach einem der vorhergehenden Ansprüche.

## Claims

1. System channel for the supply of media, in particular to a laboratory workplace (10), with an outer peripheral surface and with a fixing profile in the area of the outer peripheral surface for fixing accessories, wherein the fixing profile (16) extends outwards from the outer peripheral surface, **characterised in that** the fixing profile (16) is fixable in an inner groove (20) of the system channel (14), wherein the inner groove (20) is formed in a housing (18) of the system channel (14) and the fixing profile (16) possesses a fixing section (21) that for fixing can be plugged or inserted into the inner groove (20).

2. System channel according to claim 1, **characterised in that** when mounted, the fixing section (21) of the fixing profile (16) is arranged in the inner groove (20).

3. System channel according to claim 1 or 2, **characterised in that** a system section (25) is connected to the fixing section (21), wherein the resulting load in the mounted state is diverted over the system section (25) onto the housing (18) of the system channel (14).

4. System channel according to one of the preceding claims, **characterised in that** the fixing profile (16) possesses a support section (22).

5. System channel according to claim 4, **characterised in that** the support section (22) has a T-shaped or mushroom-shaped cross section.

6. System channel according to claim 4 or 5, **characterised in that** the support section (22) possesses an outwardly pointing bar (23, 32), onto which an accessory holder can be plugged, hung or clamped by force.

7. System channel according to claim 6, **characterised in that** the bar (23, 32) has a rectangular or circular segment-shaped profile with an outwardly pointing curvature.

8. System channel according to one of the preceding claims, **characterised in that** the fixing profile (16) is made of aluminium or is manufactured as an injection-moulded part.

9. Workplace, in particular a laboratory workplace, with a system channel (14) according to one of the preceding claims.

## Revendications

1. Canalisation de système pour l'alimentation en fluide, plus particulièrement au niveau d'un poste de travail de laboratoire (10), avec une surface circonférentielle externe et avec un profilé de fixation au niveau de la surface circonférentielle externe pour la fixation d'accessoires, le profilé de fixation (16) s'étendant de la surface circonférentielle externe vers l'extérieur, **caractérisée en ce que** le profilé de fixation (16) peut être fixé dans une rainure interne (20) de la canalisation de système (14), la rainure interne (20) étant réalisée dans un boîtier (18) de la canalisation de système (14) et le profilé de fixation (16) comprenant une portion de fixation (21) qui peut être enfichée ou insérée dans la rainure interne (20) pour la fixation.

2. Canalisation de système selon la revendication 1, **caractérisée en ce que** la portion de fixation (21) du profilé de fixation (16) est disposée dans la rainure (20) dans l'état monté.

3. Canalisation de système selon la revendication 1 ou 2, **caractérisée en ce qu'**une portion d'installation (25) est relié à la portion de fixation (21), la charge apparaissant, dans un état monté, sur le la portion d'installation (25) étant déviée vers le boîtier (18) de la canalisation de système (14).

4. Canalisation de système selon l'une des revendications précédentes, **caractérisée en ce que** le profilé de fixation (16) comprend une portion de support (22).

5. Canalisation de système selon la revendication 4, **caractérisée en ce que** la portion de support (22) a une section transversale en forme de T ou en forme de chapeau de champignon.

6. Canalisation de système selon la revendication 4 ou 5, **caractérisée en ce que** la portion de support (22) comprend une barre (23, 32) orientée vers l'extérieur, sur laquelle un support d'accessoires peut être enfiché, suspendu ou serré comme avec une pince.

7. Canalisation de système selon la revendication 6, **caractérisée en ce que** la barre (23, 32) présente un profil rectangulaire ou en forme de segment de cercle avec un arrondi orienté vers l'extérieur.

8. Canalisation de système selon l'une des revendications précédentes, **caractérisée en ce que** le profilé de fixation (16) est constitué d'aluminium ou est fabriqué comme une pièce moulée par injection.

9. Poste de travail, plus particulièrement poste de travail de laboratoire, avec une canalisation de système (14) selon l'une des revendications précédentes.
